# EUROPEAN PATENT APPLICATION

(11) **EP 4 746 131 A1**
(43) Date of publication of application: **20.05.2026**
(21) Application number: 25216405.8
(22) Date of filing: 17.11.2025
(51) Int. Cl.: H01M 10/643, H01M 10/6567, H01M 10/659, H01M 50/213

(54) **BATTERY MODULE**

(30) Priority: 18.11.2024 KR 20240163795
(71) Applicant: INZICONTROLS CO., LTD., Siheung-si, Gyeonggi-do 15090 (KR)
(72) Inventor: KIM, Jung Min, Siheung-si, Gyeonggi-do 15090 (KR); KANG, Sung Min, Siheung-si, Gyeonggi-do 15090 (KR); KIM, Su Gil, Siheung-si, Gyeonggi-do 15090 (KR); NAMGUNG, Jae Woong, Siheung-si, Gyeonggi-do 15090 (KR); LEE, Geon Hui, Siheung-si, Gyeonggi-do 15090 (KR); JO, Kyung Sik, Siheung-si, Gyeonggi-do 15090 (KR); CHOI, Hyung Min, Siheung-si, Gyeonggi-do 15090 (KR)
(74) Representative: V.O.

(57) **Abstract**

A battery module according to an embodiment of the present invention may include a case, a battery cell assembly accommodated inside the case and comprising a plurality of battery cells, a cell holder disposed inside the case and including a plurality of cell fixing holes into which the battery cells are inserted, a foam portion disposed on one side of the cell holder, an immersion portion disposed on the other side of the cell holder, and a sealing member provided between the cell holder and the battery cell assembly. Here, the sealing member may be disposed between the foam portion and the immersion portion. In addition, one ends of the battery cells may be positioned in the foam portion, and the other ends of the battery cells may be positioned in the immersion portion.

## Description

### CROSS-REFERENCE TO RELATED APPLICATION

This application claims priority from and the benefit of Korean Patent Application No. 10-2024-0163795 filed on November 18, 2024, in the Korean Intellectual Property Office, the disclosure of which is incorporated herein by reference.

### BACKGROUND OF THE DISCLOSURE

### Field of the Disclosure

Example embodiments relate to a battery module, and more particularly, to a battery module, in which not only the cooling performance and efficient thermal management of the battery module are remarkably excellent, but also the flame propagation can be effectively prevented.

### Description of the Related Art

In general, batteries are widely used in electrical devices that cannot be connected by wires, such as portable electronic devices, mobile communication terminals, and electric vehicles. Accordingly, the battery market has been expanding, and technological developments in batteries have been actively progressing.

Research and development have been conducted to maximize the cooling and thermal management efficiency by directly cooling the battery cells through the application of an immersion cooling method to a battery module. In addition, there has been an increasing demand for a battery module capable of not only maximizing thermal management efficiency but also effectively preventing flame propagation.

### SUMMARY

An embodiment of the present invention provides a battery module, in which the cooling performance and thermal management efficiency of the battery module are remarkably excellent, and, in addition, flame propagation caused by ignition of the battery cells can be effectively prevented.

Furthermore, an embodiment of the present invention provides a battery module, which apply an immersion cooling structure for cooling and efficient thermal management of the battery module and a foam-type blocking structure for preventing flame propagation, thereby achieving both high cooling efficiency and flame propagation prevention performance simultaneously.According to an embodiment of the present invention, a battery module may include a case; a battery cell assembly accommodated inside the case and including a plurality of battery cells; a cell holder disposed inside the case and including a plurality of cell fixing holes into which the battery cells are inserted; a foam portion disposed on one side of the cell holder; an immersion portion disposed on the other side of the cell holder; and a sealing member provided between the cell holder and the battery cell assembly.

Here, the sealing member may be disposed between the foam portion and the immersion portion. One end of each of the battery cells may be disposed at the foam portion, and the other end of each of the battery cells may be disposed at the immersion portion.

Preferably, the battery module according to an embodiment of the present invention may further include a cell fixing portion having an electrode electrically connected to one end of the battery cells, wherein the foam portion may be disposed between the cell fixing portion and the cell holder.

Preferably, the foam portion may include a foam material, and the foam material may be formed to surround each of the one ends of the battery cells.

Preferably, the immersion portion may include a non-conductive cooling fluid.

Preferably, the cell holder may include a holder body in which the plurality of cell fixing holes are formed, and an immersion shielding portion extending from the other side of the holder body toward the immersion portion. Here, the immersion shielding portion may be disposed between the plurality of battery cells, and a portion of the immersion shielding portion connected to the holder body may be in contact with the sealing member.

The case may include an upper portion and a lower portion formed opposite to the upper portion. The lower portion of the case may face the other side of the holder body, and the immersion shielding portion may extend so as to be spaced apart from the lower portion of the case.

In addition, the immersion shielding portion may have a height shorter than the other ends of the battery cells.

Preferably, the cell holder may further include a foam shielding portion extending from the other side of the holder body toward the foam portion.

Preferably, the immersion shielding portion and the foam shielding portion may each be formed to extend along a longitudinal direction of the case.

Preferably, the battery module according to an embodiment of the present invention may include a cooling channel formed in the immersion portion. For example, the cooling channel may include: a first cooling channel formed on one side of the immersion portion in a width direction of the case along the longitudinal direction of the case, with respect to the immersion shielding portion; a second cooling channel formed on the other side of the immersion portion in the width direction of the case along the longitudinal direction of the case, with respect to the immersion shielding portion; and a third cooling channel formed between a rear portion of the case and the immersion shielding portion so as to connect the first cooling channel and the second cooling channel.

Preferably, a portion of the foam portion may be inserted into a gap space formed between the cell fixing holes and the battery cells, and a portion of the sealing member may be inserted into the gap space. Here, the portion of the sealing member may be inserted deeper into the gap space than the foam portion.

Preferably, the case may include a case body having an open front and rear, and end plates respectively mounted on the front and rear of the case body, wherein the cell holder may be fastened and fixed to the end plates.

Preferably, the cell holder may have a thickness greater than that of the cell fixing portion.

### BRIEF DESCRIPTION OF THE FIGURES

Embodiments will be described in more detail with regard to the figures, wherein like reference numerals refer to like parts throughout the various figures unless otherwise specified, and wherein:
FIG. 1 is a perspective view showing a battery module according to an embodiment of the present invention.
FIG. 2 is a side view schematically illustrating an internal structure of the battery module shown in FIG. 1.
FIG. 3 is a plan view schematically illustrating an immersion portion of the battery module shown in FIG. 2.
FIG. 4 is a view illustrating a cell holder and end plates shown in FIGS. 2 and 3.
FIGS. 5 and 6 are views illustrating an installation state of the cell holder and the end plates shown in FIGS. 3 and 4.
FIG. 7 is an exploded perspective view showing the battery module shown in FIG. 1.
FIG. 8 is an exploded perspective view showing a battery cell assembly, a cell holder, and a cell fixing portion shown in FIG. 7.
FIG. 9 is a view illustrating a manufacturing process of the battery module according to an embodiment of the present invention.
FIG. 10 is an enlarged view showing a portion "A" illustrated in part (e) of FIG. 9.

### DETAILED DESCRIPTION OF THE DISCLOSURE

Hereinafter, embodiments of the present invention will be described in detail with reference to the accompanying drawings. However, the present invention is not limited to or restricted by the embodiments described herein. The same reference numerals denote the same components throughout the drawings.

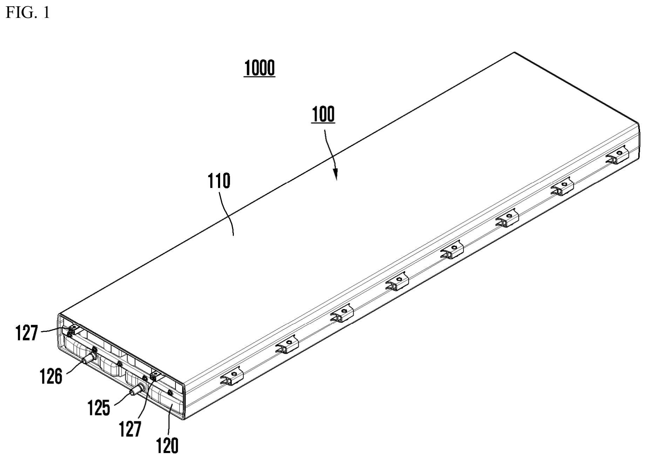

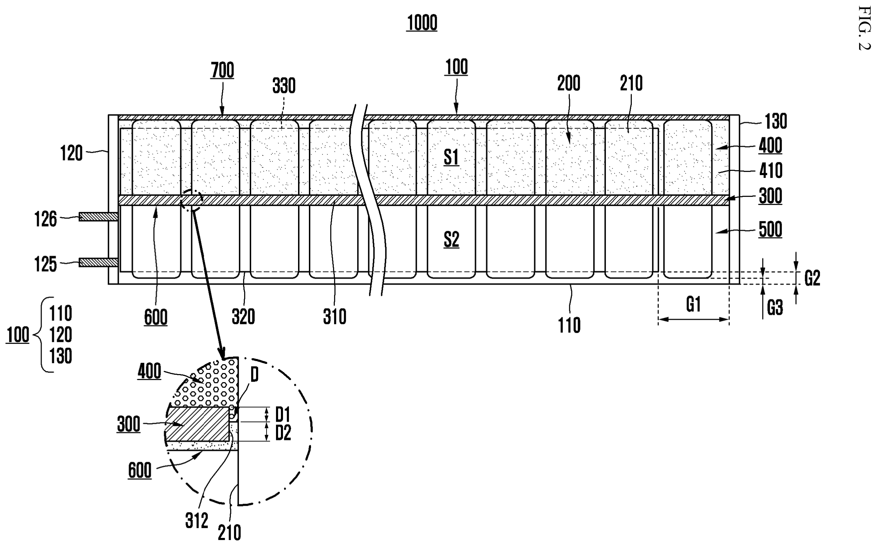

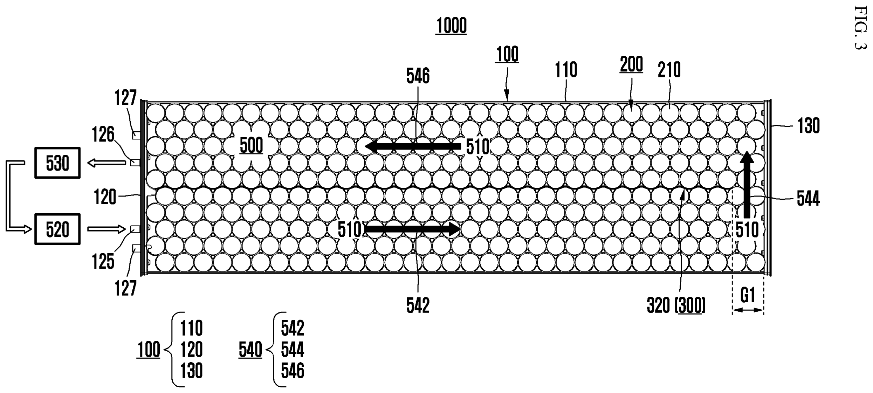

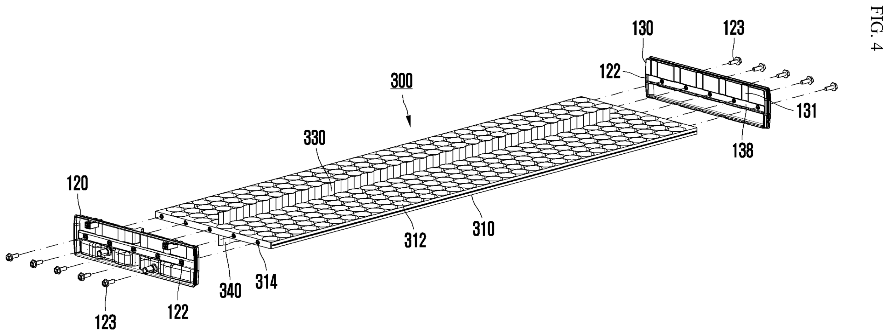

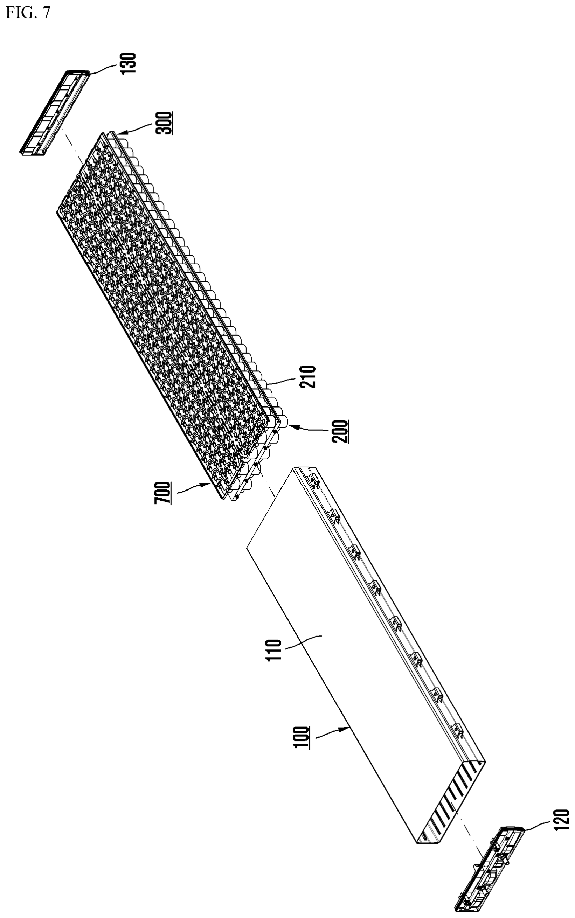

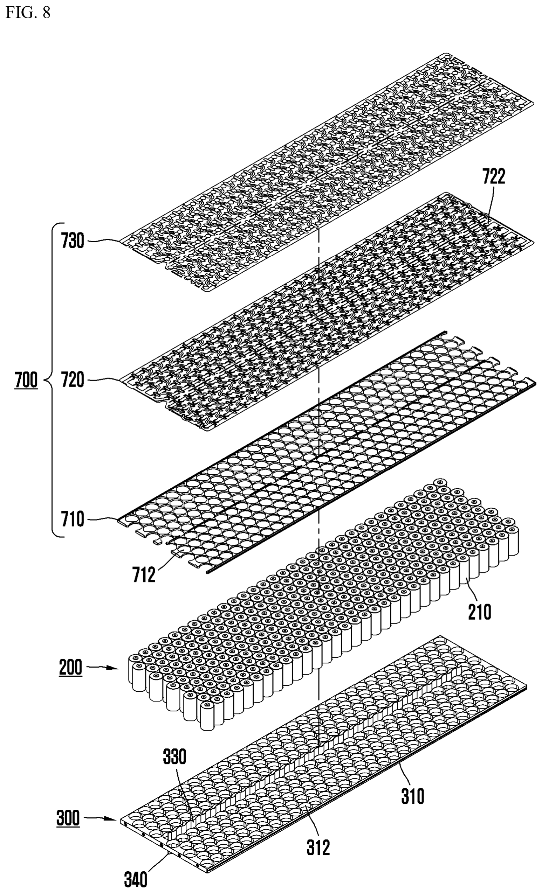

FIG. 1 is a perspective view showing a battery module 1000 according to an embodiment of the present invention. FIG. 2 is a side view schematically illustrating an internal structure of the battery module 1000 shown in FIG. 1, and FIG. 3 is a plan view schematically illustrating an immersion portion 500 of the battery module 1000 shown in FIG. 2. FIG. 4 is a view illustrating a cell holder 300 and end plates 120 and 130 shown in FIGS. 2 and 3, and FIGS. 5 and 6 are views illustrating an installation state of the cell holder 300 and the end plates 120 and 130 shown in FIGS. 3 and 4. FIG. 7 is an exploded perspective view showing the battery module 1000 shown in FIG. 1, and FIG. 8 is an exploded perspective view showing a battery cell assembly 200, the cell holder 300, and a cell fixing portion 700 shown in FIG. 7.

Referring to FIGS. 1 to 3, the battery module 1000 according to an embodiment of the present invention may include a case 100, a battery cell assembly 200, a cell holder 300, a foam portion 400, an immersion portion 500, a sealing member 600, and a cell fixing portion 700.

In the battery module 1000 of this embodiment, for convenience of explanation, the foam portion 400 and the immersion portion 500 are described as being provided at an upper portion and a lower portion, respectively, inside the case 100. Specifically, the foam portion 400 may be formed in a first space S1 defined above the cell holder 300 that divides the inner space of the case 100 vertically, and the immersion portion 500 may be formed in a second space S2 defined below the cell holder 300 that divides the inner space of the case 100 vertically. In this embodiment, for convenience of explanation, a longitudinal direction of the case 100 is defined as a front-rear direction, and a width direction of the case 100 is defined as a left-right direction.

In addition, in this embodiment, the battery cells 210 of the battery cell assembly 200 are described as being formed in a cylindrical cell structure; however, the present invention is not limited thereto, and the battery cells 210 may also be formed in various shapes such as polygonal column, disc, polygonal plate, or other polygonal forms.

Meanwhile, the battery module 1000 of this embodiment may be easily applied to a battery system used in an electric vehicle or a wireless electric aircraft. As described above, the battery system utilizing the battery module 1000 of this embodiment can exhibit excellent cooling performance and efficient thermal management, and can also sufficiently ensure flame propagation prevention when a flame occurs in the battery cells 210, thereby reducing the risk of accidents.

Referring to FIGS. 1 to 7, a case 100 of this embodiment serves as a protective structure forming an outer periphery of a battery module system 1000 and may be formed in a box shape having an internal space. In this embodiment, for convenience of explanation, the case 100 is described as being provided in the form of a rectangular box structure extending in a front-rear direction; however, the present invention is not limited thereto, and the case 100 may be implemented in various types of box structures.

For example, the case 100 of this embodiment may include a case body 110 having open front and rear portions, and end plates 120 and 130 respectively mounted on the front and rear of the case body 110.

Here, the case body 110 may be formed in a rectangular frame structure having open front and rear sides. An internal space for accommodating a battery cell assembly 200 and a cell holder 300 may be provided inside the case body 110.

The end plates 120 and 130 may be provided as a front end plate 120 mounted to the front of the case body 110, and a rear end plate 130 mounted to the rear of the case body 110.

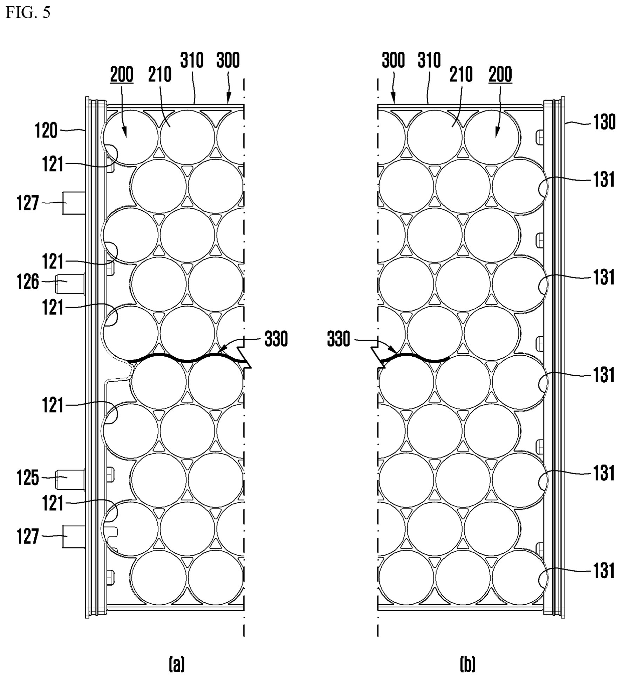

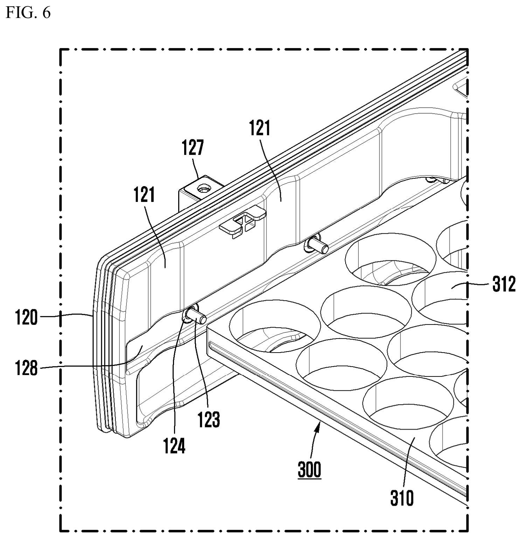

As shown in FIGS. 5 and 6, inner surfaces of the end plates 120 and 130 may be provided with structures into which side portions of the battery cells 210 disposed at front and rear portions of the battery cell assembly 200 are inserted and seated. For example, a plurality of front seating grooves 121 may be formed on an inner surface of the front end plate 120 so that front side portions of the battery cells 210 disposed at the front portion of the battery cell assembly 200 are inserted and seated. Likewise, a plurality of rear seating grooves 131 may be formed on an inner surface of the rear end plate 130 so that rear side portions of the battery cells 210 disposed at the rear portion of the battery cell assembly 200 are inserted and seated. Accordingly, the front end plate 120 and the rear end plate 130 can serve to stably support the front and rear portions of the battery cell assembly 200.

As shown in FIGS. 1 to 5, a fluid supply port 125 and a fluid discharge port 126 may be formed in the front end plate 120. The fluid supply port 125 may be formed as an inlet structure for supplying a non-conductive cooling fluid 510 from outside into an internal space of the case 100, and the fluid discharge port 126 may be formed as an outlet structure for discharging the non-conductive cooling fluid 510 from the internal space of the case 100 to the outside. The fluid supply port 125 may be fluidly connected to a fluid supply unit 520, which will be described later, and the fluid discharge port 126 may be fluidly connected to a fluid discharge unit 530, which will be described later.

In this case, the fluid supply port 125 may be arranged to communicate with an inlet side of a cooling channel 540, which will be described later, and the fluid discharge port 126 may be arranged to communicate with an outlet side of the cooling channel 540.

Here, a relatively low-temperature non-conductive cooling fluid 510 may be supplied through the fluid supply port 125, and a relatively high-temperature non-conductive cooling fluid 510, which has exchanged heat with the battery cells 210, may be discharged through the fluid discharge port 126. Therefore, in order to facilitate smooth supply and discharge of the non-conductive cooling fluid 510, it is preferable that the fluid supply port 125 is formed at a position relatively lower than the fluid discharge port 126.

Referring to FIGS. 2, 3, 5, 7, and 8, a battery cell assembly 200 of this embodiment may be provided in a structure in which a plurality of battery cells 210 are connected in an aligned arrangement of rows and columns in a horizontal direction. The battery cell assembly 200 as described above may be accommodated inside the case 100 and may be stably fixed inside the case 100 by the cell holder 300.

As shown in FIG. 2, in this embodiment, electrode terminals of the battery cells 210 are described as being formed at one ends of the battery cells 210. One ends of the battery cells 210 are positioned in a first space S1 provided at an upper portion of an internal space of the case 100, and the other ends of the battery cells 210 are positioned in a second space S2 provided at a lower portion of the internal space of the case 100. In this case, the other ends of the battery cells 210 may be disposed to be spaced apart from a lower portion of the case 100.

Referring to FIGS. 2, 4, and 6 to 7, a cell holder 300 of this embodiment may be configured to fix the battery cell assembly 200 within the internal space of the case 100. The cell holder 300 may be disposed inside the case 100 so as to be positioned at an intermediate height of the internal space of the case 100. A front portion of the cell holder 300 may be fastened and fixed to the front end plate 120, and a rear portion of the cell holder 300 may be fastened and fixed to the rear end plate 130.

For example, the cell holder 300 of this embodiment may include a holder body 310, an immersion shielding portion 320, and a foam shielding portion 330. It is to be noted that, unlike the cell holder 300 of this embodiment, a cell holder configured with only the holder body 310 and the immersion shielding portion 320 may also be possible; however, detailed description thereof will be omitted herein.

As shown in FIGS. 2 and 4 to 6, a holder body 310 may be provided in a panel shape having a predetermined thickness and horizontally disposed inside the case 100. That is, the holder body 310 may be formed in a panel shape that divides an internal space of the case 100 into a first space S1 and a second space S2. Accordingly, the first space S1 may be formed above the holder body 310, and the second space S2 may be formed below the holder body 310.

Here, the holder body 310 may be formed with a plurality of cell fixing holes 312 through which the battery cells 210 are inserted and fixed. The plurality of cell fixing holes 312 may be arranged in a pattern corresponding to an array structure of the battery cells 210 of the battery cell assembly 200. It is to be noted that the holder body 310 may be coupled through the middle portions of the battery cells 210. Therefore, upper ends of the battery cells 210 may be positioned in the first space S1, and lower ends of the battery cells 210 may be positioned in the second space S2.

In addition, front and rear ends of the holder body 310 may be fastened and fixed to the front end plate 120 and the rear end plate 130. For example, a plurality of holder fastening holes 314 may be formed at the front and rear ends of the holder body 310, and a plurality of plate fastening holes 122 corresponding to the holder fastening holes 314 may be respectively formed in the front end plate 120 and the rear end plate 130. Accordingly, by fastening fastening members 123 through the holder fastening holes 314 of the holder body 310 and the plate fastening holes 122 of the front end plate 120 and the rear end plate 130, the cell holder 300 can be stably fixed inside the internal space of the case 100 by the end plates 120 and 130.

In addition, it is preferable to additionally install O-rings 124 at rear surfaces of the plate fastening holes 122 of the end plates 120 and 130 in order to seal the plate fastening holes 122. Accordingly, in this embodiment, leakage of the non-conductive cooling fluid 510 through the plate fastening holes 122 can be safely prevented.

Furthermore, the end plates 120 and 130 may each be provided with horizontally formed holder grooves 128 and 138, into which front and rear ends of the holder body 310 are fitted when the holder body 310 is fastened. For example, a front holder groove 128 may be formed on an inner surface of the front end plate 120 so that a front end of the holder body 310 is inserted and fixed, and a rear holder groove 138 may be formed on an inner surface of the rear end plate 130 so that a rear end of the holder body 310 is inserted and fixed. In this case, the plate fastening holes 122 may be formed inside the front holder groove 128 and the rear holder groove 138. Accordingly, in this embodiment, the holder body 310 can be easily positioned and more stably supported by the front holder groove 128 and the rear holder groove 138.

As shown in FIGS. 2 to 5 and 8, an immersion shielding portion 320 may extend from a lower surface of the holder body 310 toward the immersion portion 500. The immersion shielding portion 320 may be provided on the lower surface of the holder body 310 so as to extend into the second space S2. The immersion shielding portion 320 as described above may be formed in a film shape partitioning an interior of the second space S2, and may have a wavy cylindrical surface shape corresponding to side surfaces of the battery cells 210 so as to prevent interference with the battery cell assembly 200.

For example, a cooling channel 540 through which a non-conductive cooling fluid 510 flows may be formed inside the second space S2 by the immersion shielding portion 320. That is, the cooling channel 540 may be provided in various shapes within the immersion portion 500 according to an arrangement pattern of the immersion shielding portion 320. In this embodiment, the immersion shielding portion 320 is described as being extended longitudinally along a front-rear direction at a middle portion in a width direction on a lower surface of the holder body 310; however, the present invention is not limited thereto, and a plurality of immersion shielding portions 320 may be formed on the lower surface of the holder body 310 in various patterns.

Meanwhile, the immersion shielding portion 320 may extend in the front-rear direction along the lower surface of the holder body 310 from a position in contact with the front end plate 120 to a position spaced apart from the rear end plate 130. That is, a front end of the immersion shielding portion 320 may be disposed to be closely attached to the front end plate 120, and a rear end of the immersion shielding portion 320 may be disposed to be spaced apart from the rear end plate 130. A first spacing distance G1 between the rear end of the immersion shielding portion 320 and the rear end plate 130 is preferably set to a distance corresponding to the diameters of two battery cells 210.

In addition, the immersion shielding portion 320 may be formed to extend downward from a lower surface of the holder body 310 along a height direction of the case 100. In this case, a lower end of the immersion shielding portion 320 may be disposed to be spaced apart from a lower portion of the case 100. The immersion shielding portion 320 as described above may be formed to extend from the lower surface of the holder body 310 to a height shorter than the other ends of the battery cells 210.

As shown in FIG. 2, a second spacing distance G2 between the lower end of the immersion shielding portion 320 and a lower surface of the second space S2 may be greater than a third spacing distance G3 between the other ends of the battery cells 210 and the lower surface of the second space S2. Therefore, even when the non-conductive cooling fluid 510 within the immersion portion 500 is stagnant without circulation, heat transfer may occur through a space formed between the immersion shielding portion 320 and the lower surface of the second space S2. As a result, thermal equilibrium of the non-conductive cooling fluid 510 present in the immersion portion 500 can be smoothly achieved. If, however, the immersion shielding portion 320 is not spaced apart from the lower surface of the second space S2 or extends downward longer than the other ends of the battery cells 210, the heat transfer effect of the non-conductive cooling fluid 510 accommodated in the second space S2 may be degraded, causing the heat of the non-conductive cooling fluid 510 to be concentrated only around a specific battery cell 210 in which thermal runaway occurs.

As shown in FIGS. 2 to 5 and 8, a foam shielding portion 330 may extend from an upper surface of the holder body 310 toward the foam portion 400. The foam shielding portion 330 may be provided on the upper surface of the holder body 310 so as to extend into an interior of the first space S1. The foam shielding portion 330 as described above may be formed to be positioned within the first space S1. Preferably, the foam shielding portion 330 may be formed in a structure corresponding to the immersion shielding portion 320. For example, the foam shielding portion 330 may be extended longitudinally in a front-rear direction along the upper surface of the holder body 310 from a position in contact with the front end plate 120 to a position spaced apart from the rear end plate 130.

However, the foam shielding portion 330 may be formed to extend downward from an upper surface of the holder body 310 along a height direction of the case 100, but unlike the immersion shielding portion 320, it is not necessary for a lower end of the foam shielding portion 330 to be spaced apart from an upper portion of the case 100.

Referring to FIG. 2, a foam portion 400 of this embodiment may be formed in a first space S1 of an internal space of the case 100 defined by the cell holder 300. For example, the foam portion 400 may include a foam material 410 formed by a foamed flame-retardant material supplied into the first space S1. The foam material 410 as described above may be provided in a structure filled in the first space S1 so as to surround one ends of the battery cells 210 positioned inside the first space S1.

Accordingly, the foam material 410 can stably protect one ends of the battery cells 210 and reinforce structural rigidity, thereby improving mechanical robustness of the battery cells 210, and can prevent damage to the battery cells 210 caused by external impacts or vibrations. In particular, since the foam material 410 is formed of a flame-retardant material, when a fire occurs due to thermal runaway caused by abnormal behavior of a battery cell 210, flame propagation to adjacent battery cells 210 or further to the entire battery module 1000 can be effectively delayed or blocked.

Meanwhile, a foam shielding portion 330 of the cell holder 300 may be disposed inside the foam portion 400. Since the foam shielding portion 330 is stably supported by the foam material 410, the cell holder 300 can be more stably positioned inside the case 100.

Referring to FIGS. 2 and 3, an immersion portion 500 of this embodiment may be formed in a second space S2 of an internal space of the case 100 defined by the cell holder 300. For example, the immersion portion 500 may include a non-conductive cooling fluid 510 that flows along a cooling channel 540 formed inside the second space S2 to cool other ends of the battery cells 210, a fluid supply unit 520 configured to supply the non-conductive cooling fluid 510 from outside the case 100 into the second space S2, and a fluid discharge unit 530 configured to discharge the non-conductive cooling fluid 510 from the second space S2 to the outside of the case 100.

The non-conductive cooling fluid 510 may be made of a non-conductive material to prevent electrical leakage or short-circuiting, and may directly contact the other ends of the battery cells 210 to perform heat exchange, thereby effectively cooling the battery cells 210. Accordingly, cooling efficiency and thermal management efficiency of the battery cells 210 can be greatly improved. The non-conductive cooling fluid 510 as described above may be accommodated inside the second space S2 to a level such that the other ends of the battery cells 210 are sufficiently submerged.

The fluid supply unit 520 may be connected to a fluid supply port 125 of the front end plate 120 and may be configured to supply a non-conductive cooling fluid 510, which is in a relatively low-temperature state, from outside the case 100 into the second space S2. For example, the fluid supply unit 520 may include a fluid supply tank and a fluid supply pump. The fluid supply unit 520 as described above may be directly connected to the fluid supply port 125 or indirectly connected thereto through a hose or a pipe.

The fluid discharge unit 530 may be connected to a fluid discharge port 126 of the front end plate 120 and may be configured to discharge the non-conductive cooling fluid 510, which has been heat-exchanged with the battery cells 210 and is in a high-temperature state, from the second space S2 inside the case 100 to the outside of the case 100. For example, the fluid discharge unit 530 may include a fluid discharge pump and a fluid discharge tank. The fluid discharge unit 530 as described above may be directly connected to the fluid discharge port 126 or indirectly connected thereto through a hose or a pipe.

Hereinafter, in this embodiment, the fluid supply pump and the fluid discharge pump are configured as a single pump, and the fluid supply tank and the fluid discharge tank are also configured as a single tank. The non-conductive cooling fluid 510 is circulated along the fluid supply unit 520, the fluid discharge unit 530, and the cooling channel 540 inside the case 100. It is to be noted that the fluid supply unit 520 and the fluid discharge unit 530 may be individually installed on the case 100 as separate components to operate the battery module 1000 independently; however, the invention is not limited thereto, and it is also possible to utilize an existing pump, tank, or heat exchanger provided in a device in which the battery module 1000 is used (for example, an electric vehicle).

As shown in FIG. 3, the fluid supply unit 520 may be provided as a pump whose inlet is connected to the fluid supply port 125 through a hose, and the fluid discharge unit 530 may be provided as a tank whose inlet is connected to the fluid discharge port 126 through a hose and whose outlet is connected to the inlet of the fluid supply unit 520 through another hose. In this case, the fluid discharge unit 530 may be equipped with a cooler or a heat exchanger configured to lower the temperature of the non-conductive cooling fluid stored in the tank. Accordingly, the fluid supply unit 520 may pump the low-temperature non-conductive cooling fluid 510 stored in the fluid discharge unit 530 and supply it to an inlet side of the cooling channel 540 through the fluid supply port 125, while the fluid discharge unit 530 may store the high-temperature non-conductive cooling fluid 510 discharged from an outlet side of the cooling channel 540 through the fluid discharge port 126 and subsequently cool the non-conductive cooling fluid 510 to a desired temperature.

As shown in FIG. 3, a cooling channel 540 formed in the immersion portion 500 of this embodiment may include a first cooling channel 542 formed along a longitudinal direction on a left side of the second space S2 with respect to the immersion shielding portion 320, a second cooling channel 544 formed along the longitudinal direction on a right side of the second space S2 with respect to the immersion shielding portion 320, and a third cooling channel 546 formed between the immersion shielding portion 320 and the rear end plate 130 to connect the first cooling channel 542 and the second cooling channel 544.

As described above, the non-conductive cooling fluid 510 may flow sequentially through the fluid supply port 125, the first cooling channel 542, the third cooling channel 546, the second cooling channel 544, and the fluid discharge port 126, thereby cooling the other ends of the battery cells 210.

Here, the first cooling channel 542 may be a channel including an inlet side of the cooling channel 540 and may be connected in communication with the fluid supply port 125. The first cooling channel 542 as described above may guide the non-conductive cooling fluid 510 supplied from the fluid supply port 125 rearward along a left portion of the second space S2.

In addition, the second cooling channel 544 may be a channel including an outlet side of the cooling channel 540 and may be connected in communication with the fluid discharge port 126. The second cooling channel 544 as described above may guide the non-conductive cooling fluid 510, which has passed through the first cooling channel 542 and the third cooling channel 546, forward along a right portion of the second space S2 and discharge it through the fluid discharge port 126.

Further, the third cooling channel 546 may be a channel connecting the first cooling channel 542 and the second cooling channel 544 and may be formed to connect a rear end of the first cooling channel 542 with a rear end of the second cooling channel 544. The third cooling channel 546 as described above may guide the non-conductive cooling fluid 510, which has passed through the first cooling channel 542, to flow laterally in a left-right direction in a rear portion of the second space S2 and guide it to the second cooling channel 544.

Referring to FIG. 2, the sealing member 600 of this embodiment may seal by filling a portion of the cell holder 300 where the battery cells 210 are inserted and combined. That is, the sealing member 600 may be provided on at least one of an upper surface and a lower surface of the cell holder 300 to seal by filling a gap formed between the cell fixing holes 312 of the cell holder 300 and the battery cells 210 of the battery cell assembly 200. Accordingly, the sealing member 600 may block separation of the gap formed between the battery cells 210 and the cell fixing holes 312 so that the non-conductive cooling fluid 510 does not flow into the foam portion 400 under normal conditions.

For example, various materials capable of sealing the gap may be used as the sealing member 600; however, in this embodiment, the sealing member 600 is described as being made of an epoxy resin. Specifically, the epoxy resin-based sealing member 600 may be applied in a liquid state with a sufficient thickness to a surface of the cell holder 300 and cured while filling the gap between the battery cells 210 and the cell fixing holes 312, thereby forming an epoxy coating layer on the surface of the cell holder 300.

Meanwhile, when the sealing member 600 is applied to the lower surface of the holder body 310 in a state in which the battery cell assembly 200 and the cell holder 300 are combined, the sealing member 600 may also be applied to the immersion shielding portion 320 connected to the holder body 310. Accordingly, the connection portion between the immersion shielding portion 320 and the holder body 310 may also be sealed and supported by the sealing member 600.

As shown in the enlarged cross-sectional view of FIG. 2, fine gap spaces D may be respectively formed between the cell fixing holes 312 and the battery cells 210. Each of the gap spaces D may be filled with at least one of the foam portion 400 and the sealing member 600. Accordingly, the gap spaces D may be reliably sealed by the foam portion 400 and the sealing member 600, and the battery cells 210 may be firmly fixed in the cell fixing holes 312 by the foam portion 400 and the sealing member 600.

For example, a portion of the foam portion 400, specifically the foam material 410, may be inserted from the first space S1 into the interior of the gap spaces D and filled therein up to a predetermined first insertion depth. Meanwhile, a portion of the sealing member 600 may be inserted from the second space S2 into the interior of the gap spaces D and filled therein up to a second insertion depth different from that of the foam portion 400. In this case, when comparing the insertion depths D1 and D2 of the foam portion 400 and the sealing member 600, respectively, it is preferable that the second insertion depth D2 of the sealing member 600 be greater than the first insertion depth D1 of the foam portion 400. More preferably, the first insertion depth D1 and the second insertion depth D2 may be formed in a ratio of 3:7 to 4:6.

Alternatively, it is also possible that a portion of the foam portion 400 or the sealing member 600 passes through the gap spaces D and is exposed to the opposite space. In such a case, the foam portion 400 or the sealing member 600 may be filled throughout the entire interior of the gap spaces D. For example, when a portion of the foam portion 400 is exposed to the second space S2, the sealing member 600 may be applied in a manner covering the exposed portion of the foam portion 400 in the second space S2.

Referring to FIGS. 2 and 6 to 8, a cell fixing portion 700 of this embodiment may be disposed above the first space S1 of the case 100 and coupled to one ends of the battery cells 210. By coupling the one ends of the battery cells 210 to the cell fixing portion 700 as described above, the battery cells 210 may be stably fixed inside the case 100 by the cell holder 300 and the cell fixing portion 700. In addition, the cell fixing portion 700 may be electrically connected to electrode terminals formed at the one ends of the battery cells 210 and also electrically connected to a busbar terminal 127 of the front end plate 120.

In this case, the cell holder 300 and the cell fixing portion 700 may be arranged in parallel inside the case 100. The cell holder 300 may have a thickness greater than that of the cell fixing portion 700. Accordingly, the battery cell assembly 200 may be stably supported by the cell holder 300 and the cell fixing portion 700, and particularly, may be more firmly supported by the cell holder 300. Preferably, the thickness of the cell holder 300 may be ten times or more greater than that of the cell fixing portion 700. For example, in this embodiment, the cell holder 300 may be formed with a thickness of 17 mm, and the cell fixing portion 700 may be formed with a thickness of 1.5 mm.

Meanwhile, the cell fixing portion 700 may include a fixing body 710, a busbar member 720, and an insulating sheet 730. The fixing body 710 may be formed to be inserted and coupled to one ends of the battery cells 210. For example, the fixing body 710 may be formed in a panel shape corresponding to the holder body 310 of the cell holder 300. A plurality of fixing holes 712 for inserting and fixing the one ends of the battery cells 210 may be provided in the fixing body 710 in a pattern similar to the cell fixing holes 312. The fixing body 710 as described above may be disposed to cover an upper portion of the battery cell assembly 200 and may be formed to have a thickness thinner than that of the holder body 310.

The busbar member 720 may be disposed on an upper surface of the fixing body 710 in a thin film form so as to be electrically connected to electrode terminals of the battery cells 210. The busbar member 720 may be formed in a structure in which a metal pattern connected to the electrode terminals of the battery cells 210 is provided on a thin insulating film disposed on the upper surface of the fixing body 710.

Here, the metal pattern of the busbar member 720 may serve as an electric circuit that connects the electrode terminals of the battery cells 210 in series or in parallel. In addition, terminal portions of the metal pattern that are electrically connected to a pair of busbar terminals 127 formed on the front end plate 120 may be formed at a front portion of the busbar member 720.

Furthermore, a pair of busbar terminals 127 may be formed on the front end plate 120 to be electrically connected to the terminal portions of the busbar member 720 through welding. The pair of busbar terminals 127 may be provided for a positive terminal and a negative terminal, respectively, and may be electrically connected to an external electrical system. The pair of busbar terminals 127 as described above may be disposed on an upper portion of the front end plate 120 to correspond to a front portion of the cell fixing portion 700.

An insulating sheet 730 may be provided in a film form covering an upper surface of the busbar member 720 to prevent electrical leakage between the busbar member 720 and the case 100. The insulating sheet 730 may be made of an insulating material and may be fabricated in a state covering the upper surface of the busbar member 720.

A manufacturing process of the battery module 1000 according to an embodiment of the present invention configured as described above is as follows.

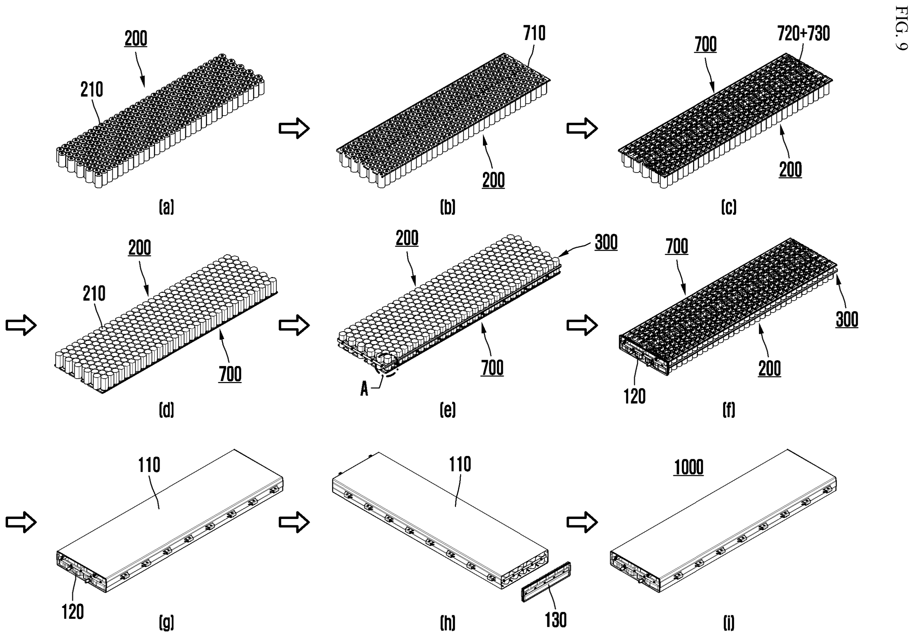

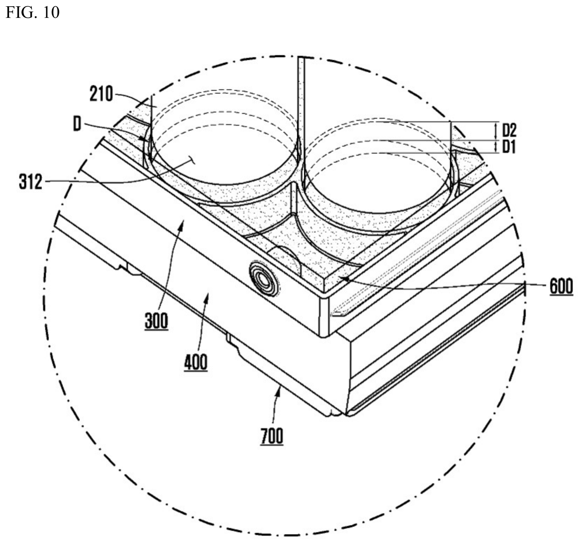

FIG. 9 is a diagram illustrating the manufacturing process of the battery module 1000 according to an embodiment of the present invention, and FIG. 10 is an enlarged view showing a portion "A" illustrated in FIG. 9(e).

First, as shown in FIG. 9(a), a plurality of battery cells 210 are arranged and connected in desired rows and columns on an imaginary horizontal plane. The battery cell assembly 200 is fabricated in a structure in which the plurality of battery cells 210 are connected as described above.

Next, as shown in FIG. 9(b), a fixing body 710 of the cell fixing portion 700 is coupled to an upper side of the battery cell assembly 200. At this time, one ends of the plurality of battery cells 210 constituting the battery cell assembly 200 are individually inserted and fixed into fixing holes 712 of the fixing body 710.

As shown in FIG. 9(c), a busbar member 720 and an insulating sheet 730 of the cell fixing portion 700 are then coupled to the fixing body 710 coupled to the upper side of the battery cell assembly 200, thereby completing assembly of the cell fixing portion 700 and the battery cell assembly 200. At this time, electrode terminals formed at the one ends of the battery cells 210 fixed to the fixing body 710 are electrically connected to the busbar member 720.

As shown in FIG. 9(d), the assembled battery cell assembly 200 having the cell fixing portion 700 is inverted such that a lower surface of the battery cell assembly 200 faces upward, and a foam-type flame-retardant material is foamed toward the lower surface of the battery cell assembly 200 to form a foam material 410. At this time, the foam-type flame-retardant material is filled in a space formed between the lower surface of the cell fixing portion 700 and the one ends of the battery cells 210. As the foam-type flame-retardant material filled as described above is foamed, a foam material is formed in a structure surrounding the one ends of the plurality of battery cells 210 individually. It is preferable that the battery cell assembly 200 with the assembled cell fixing portion 700 be rotated by an angle of 180 degrees using a separate rotation jig.

As shown in FIG. 9(e), the cell holder 300 is coupled to the battery cell assembly 200 in which the foam material 410 has been formed. Specifically, the cell holder 300 is coupled to the battery cell assembly 200 in a direction in which other ends of the battery cells 210 are inserted through the cell fixing holes 312 of the cell holder 300. It is preferable that this process be performed before the foam material 410 is completely cured.

That is, the one ends of the battery cells 210 and the foam material 410 are positioned between the cell fixing portion 700 and the cell holder 300. When the cell holder 300 is coupled to the lower ends of the battery cells 210, a portion of the foam material 410 may be inserted into gap spaces D formed between the cell fixing holes 312 and the battery cells 210 by the coupling force of the cell holder 300 and may be filled in upper portions of the gap spaces D. If the coupling force of the cell holder 300 is sufficiently increased, a portion of the foam material 410 may pass through the gap spaces D and the cell fixing holes 312 to be exposed to a lower surface of the cell holder 300.

Subsequently, the foam material 410 is cured to complete formation of the foam portion 400, and the sealing member 600 is applied with a predetermined thickness to a lower surface of the cell holder 300. As shown in FIG. 10, a portion of the sealing member 600 enters the gap spaces D during application to the lower surface of the cell holder 300 and is filled in lower portions of the gap spaces D. Accordingly, in the gap spaces D, a portion of the foam material 410 is inserted at a first insertion depth D1 into upper portions of the gap spaces D to fill approximately 30% to 40% thereof, and a portion of the sealing member 600 is inserted at a second insertion depth D2 into lower portions of the gap spaces D to fill approximately 60% to 70% thereof. As a result, the foam material 410 and the sealing member 600 firmly fix the battery cells 210 inside the cell fixing holes 312 while providing stable sealing performance. In particular, the sealing member 600 not only reliably seals the gap spaces D but is also applied to a connection portion between a holder body 310 and an immersion shielding portion 320 of the cell holder 300 to improve structural stability of the immersion shielding portion 320.

As shown in FIG. 9(f), when curing of the sealing member 600 is completed, the battery cell assembly 200 in which the cell fixing portion 700 and the cell holder 300 are assembled is turned back to its initial orientation so that an upper surface of the battery cell assembly 200 faces upward, and a front end plate 120 of the case 100 is assembled.

Specifically, a front end portion of a holder body 310 of the cell holder 300 is inserted into a front holder groove 128 of the front end plate 120, and the front end plate 120 is coupled to the front end portion of the holder body 310. Thereafter, a fastening member 123 is fastened to a plate fastening hole 122 of the front end plate 120 and a holder fastening hole 314 of the cell holder 300 to fix the front end plate 120 to the front end portion of the cell holder 300. In addition, a pair of busbar terminals 127 formed on the front end plate 120 are connected, for example by welding, to terminal portions of a busbar member 720 of the cell fixing portion 700.

As shown in FIG. 9(g), after assembly of the front end plate 120 to the battery cell assembly 200 in which the cell fixing portion 700 and the cell holder 300 are assembled is completed, a portion of the battery cell assembly 200 where the front end plate 120 is not mounted is slid into an open front of a case body 110 of the case 100 so that the battery cell assembly 200 is completely accommodated inside the case body 110. Then, the front end plate 120 is mounted on the front of the case body 110.

As shown in FIG. 9(h), when mounting of the front end plate 120 is completed while the battery cell assembly 200-having the cell fixing portion 700 and the cell holder 300 assembled therein-is accommodated inside the case body 110, a rear end portion of a holder body 310 of the cell holder 300 is inserted into a rear holder groove 138 of a rear end plate 130, and the rear end plate 130 is coupled to the rear end portion of the holder body 310. Thereafter, a fastening member 123 is fastened through a plate fastening hole 122 of the rear end plate 130 and a holder fastening hole 314 of the cell holder 300, thereby fixing the rear end plate 130 to the rear end portion of the holder body 310. Finally, the rear end plate 130 is mounted on the rear of the case body 110 to complete assembly of the case 100.

As shown in FIG. 9(i), after assembly of the case 100 is completed, a non-conductive cooling fluid 510 is injected into the inside of the case 100 through a fluid supply port 125 formed in the front end plate 120. At this time, the non-conductive cooling fluid 510 is stored in a second space S2 formed inside the case 100.

In the process of injecting the non-conductive cooling fluid 510, both the fluid supply port 125 and a fluid discharge port 126 are opened, and the non-conductive cooling fluid 510 is injected through the fluid supply port 125 by means of a separate injector. When the injected non-conductive cooling fluid 510 begins to be discharged through the fluid discharge port 126, the fluid supply port 125 and the fluid discharge port 126 are sealed by separate caps. Once the injection of the non-conductive cooling fluid 510 is completed as described above, the manufacturing process of the battery module 1000 is also completed.

While the embodiments of the present invention have been described above with reference to specific components, limited embodiments, and drawings, these have been provided merely for a more comprehensive understanding of the invention. The present invention is not limited to the embodiments described above, and various modifications and alterations may be made by those skilled in the art from the foregoing description. Therefore, the spirit and scope of the present invention should not be limited to the described embodiments, and all modifications and equivalent variations that fall within the scope of the appended claims are intended to be encompassed by the present invention.

## Claims

1. A battery module comprising:
a case;
a battery cell assembly accommodated inside the case and including a plurality of battery cells;
a cell holder disposed inside the case and including a plurality of cell fixing holes into which the battery cells are inserted;
a foam portion disposed on one side of the cell holder;
an immersion portion disposed on the other side of the cell holder; and
a sealing member provided between the cell holder and the battery cell assembly,
wherein the sealing member is disposed between the foam portion and the immersion portion,
and one end of each of the battery cells is disposed at the foam portion while the other end of each of the battery cells is disposed at the immersion portion.

2. The battery module of claim 1, further comprising:
a cell fixing portion having an electrode electrically connected to one end of the battery cells,
wherein the foam portion is disposed between the cell fixing portion and the cell holder.

3. The battery module of claim 1,
wherein the foam portion includes a foam material,
and the foam material is formed to surround each of the one ends of the battery cells.

4. The battery module of claim 1,
wherein the immersion portion includes a non-conductive cooling fluid.

5. The battery module of claim 1,
wherein the cell holder includes:
a holder body in which the plurality of cell fixing holes are formed; and
an immersion shielding portion extending from the other side of the holder body toward the immersion portion,
and the immersion shielding portion is disposed between the plurality of battery cells.

6. The battery module of claim 5,
wherein a portion of the immersion shielding portion connected to the holder body is in contact with the sealing member.

7. The battery module of claim 5,
wherein the case includes an upper portion and a lower portion formed opposite to the upper portion,
the lower portion of the case faces the other side of the holder body,
and the immersion shielding portion extends so as to be spaced apart from the lower portion of the case.

8. The battery module of claim 6,
wherein the immersion shielding portion has a height shorter than the other ends of the battery cells.

9. The battery module of claim 5,
wherein the cell holder further includes a foam shielding portion extending from one side of the holder body toward the foam portion.

10. The battery module of claim 9,
wherein the immersion shielding portion and the foam shielding portion are each formed to extend along a longitudinal direction of the case.

11. The battery module of claim 5,
further comprising a cooling channel formed in the immersion portion,
wherein the cooling channel includes:
a first cooling channel formed on one side of the immersion portion in a width direction of the case along the longitudinal direction of the case, with reference to the immersion shielding portion;
a second cooling channel formed on the other side of the immersion portion in the width direction of the case along the longitudinal direction of the case, with reference to the immersion shielding portion; and
a third cooling channel formed between a rear portion of the case and the immersion shielding portion so as to connect the first cooling channel and the second cooling channel.

12. The battery module of claim 1,
wherein a portion of the foam portion is inserted into a gap space formed between the cell fixing holes and the battery cells,
and a portion of the sealing member is inserted into the gap space.

13. The battery module of claim 12,
wherein the portion of the sealing member is inserted deeper into the gap space than the foam portion.

14. The battery module of claim 1,
wherein the case includes:
a case body having an open front and rear; and
end plates respectively mounted on the front and rear of the case body,
and the cell holder is fastened and fixed to the end plates.

15. The battery module of claim 2,
wherein the cell holder has a thickness greater than that of the cell fixing portion.
